# EUROPEAN PATENT APPLICATION

(11) **EP 2 346 230 A1**
(43) Date of publication of application: **20.07.2011**
(21) Application number: 09823473.5
(22) Date of filing: 14.10.2009
(51) Int. Cl.: H04M 1/00, H04M 1/725

(54) **MOBILE ELECTRONIC DEVICE AND DISPLAY SCREEN SWITCHING METHOD**

(30) Priority: 27.10.2008 JP 2008275713
(71) Applicant: NEC Corporation, Minato-ku Tokyo 108-8001 (JP)
(72) Inventor: YOSHIOKA, Kenji, Tokyo 108-8001 (JP)
(74) Representative: Betten & Resch
(86) International application number: PCT/JP2009/067754
(87) International publication number: WO 2010/050360

(57) **Abstract**

Provided is a portable electronic device having a plurality of cases whose shapes can be changed from a first shape to second shape or vice versa, via at least one intermediate shape. The portable electronic device includes; display unit (2); shape detection unit (3) that outputs a signal indicating one shape from among the first shape, the second shape, and the intermediate shape into which the plurality of cases has been changed; and control unit (1) that recognizes the shape of the plurality of cases based on the signal from shape detection unit (3) and that causes display unit (2) to display an image with a screen configuration corresponding to the recognized shape. When a change is made from the first or second shape to the intermediate shape, control unit (1) determines whether to enable implementation of a processing operation to cause display unit (2) to display an image with a screen configuration corresponding to the intermediate shape depending on whether time that elapsed in a state of maintaining the intermediate shape, from the time at which a change in the shape occurred, has reached a threshold value,

## Description

### Technical Field

The present invention relates to a portable electronic device typified by a mobile phone, and more particularly to a portable electronic device in which changes to the shape of the case can be made by switching between two different shapes via at least one intermediate shape.

### Background Art

JP2002-135380A (hereinafter, "Patent Literature 1")discloses a portable electronic device in which changes to the shape of the case can be made by switching between two different shapes via at least one intermediate shape. This portable electronic device includes a first case that has a reception unit and a display unit, and a second case that has a transmission unit. The first case and the second case are connected to each other by a hinge.

The first of the case can be changed among the a first to a third shapes by rotating the first case around the hinge. The first shape is a state in which the first case and the second case are completely open. The second shape is a state in which the first case overlaps the second case (the first case and the second case are completely closed), The third shape is a state in which the first case and the second case are held at an angle of roughly 90 degrees.

The third shape is an intermediate shape. A change in the shape of the case is made by switching between the first and second shapes via this intermediate shape. In the first, and second shapes, the display unit is used as a vertically-long screen. In the third shape, the display screen is used as a horizontally-long screen. On the vertically-long screen in the second shape, a screen in which an up-and-down direction of the vertically-long direction in the first shape is reversed is displayed.

### Disclosure of Invention

However, the portable electronic device described in the Patent Literature 1 has the following problems.

When a change, is made from the first shape to the second shape or vice versa, the horizontally-long screen in the third shape that is the intermediate shape is always displayed in the process in which the shape undergoes change. For example, when a change in which the shape, of the case is made from the first shape to the second shape, the vertically-long screen in the first shape is first switched to the horizontally-long screen in the third shape, and then the horizontally-long screen in the third shape is switched to the vertically-long screen in the second shape. In this screen switching, the processing operation to switch the display of the horizontally long screen is normally unnecessary. Thus, in the portable electronic device described in the Patent Literature 1, when a change is made from the first shape to the second shape or vice versa, an unnecessary processing operation to switch the screen display is performed. As a result, screen switching takes time, and the processing operation to switch the screen display is accompanied by an increase in load on a. processing unit (CPU).

It is an object of the present invention to provide, a portable electronic device and a display screen switching method that can solve the aforementioned problems, reduce processing loads accompanying screen switching, and shorten time necessary for the screen switching.

In order to achieve the object, a portable electronic device having a plurality of cases that can be changed from a first shape to a second shape or vice versa via at least one intermediate shape, includes:
a display unit;
a shape detection unit that outputs a signal indicating one shape from among the first shape, the second shape, and the intermediate shape into which the plurality of cases have been changed; and
a control unit that recognizes the shape of the plurality of cases based on the signal from the shape detection unit and that causes the display unit to display an image with a screen configuration corresponding to the recognized shape.
In this case, when a change is made from the first or second shape to the intermediate shape, the control unit determines whether to enable execution of processing for causing the display unit to display an image with a screen configuration corresponding to the intermediate shape depending on whether time that elapsed in a state of remaining the intermediate shape, from the time at which a change in the shape occurred, has reached a threshold value.

The present invention provides a display screen switching method implemented in a portable electronic device having a plurality of cases that can be changed from a first shape to a second shape or vice versa via at least one intermediate shape. The display screen switching method includes:
determining one shape from among the first shape, the second shape, and the intermediate shape into which the plurality of cases have been changed, and causing a display unit to display an image with a screen configuration corresponding to the determined shape; and
when a change is made from the first or second shape to the intermediate shape, determining whether to enable execution of processing for causing the display unit to display an image with a screen configuration corresponding to the intermediate shape depending on whether time that elapsed in a state of remaining the intermediate shape, from the time at which a change in the shape occurred, has reached a threshold value.

### Brief Description of Drawings

Fig. 1 is a block diagram showing a configuration of a main portion of a mobile phone according to an exemplary embodiment of the present invention
Fig. 2 is a schematic view showing a shape of the mobile phone according to the exemplary embodiment, of the present invention.
Fig. 3 is a schematic view showing another shape of the mobile phone according to the exemplary embodiment of the present invention.
Fig. 4 is a schematic view showing still another shape of the mobile phone according to the exemplary embodiment of the present invention.
Fig. 5 is a schematic view showing an arrangement example of a shape detection unit of the mobile phone shown in Fig. 1 for detecting the shape shown in Fig. 2.
Fig. 6 is a schematic view showing an arrangement example of the shape detection unit of the mobile phone shown in Fig. 1 for detecting the shape shown in Fig. 3.
Fig. 7 is a schematic view showing an arrangement example of the shape, detection unit of the mobile phone shown in Fig. 1 for detecting the shape shown in Fig. 4.
Fig. 8 is a flowchart showing a processing operation in which the screen display is switched that is performed in the mobile phone shown in Fig. 1.

### Description of Reference Numerals

- 1: Control unit
- 1a: Timer
- 2: Display unit
- 3: Shape detection unit
- 4: Storage unit
- 5: Input unit

### Modes for Carrying out Invention

Hereinafter, an exemplary embodiment of the present invention is described with reference to the drawing.

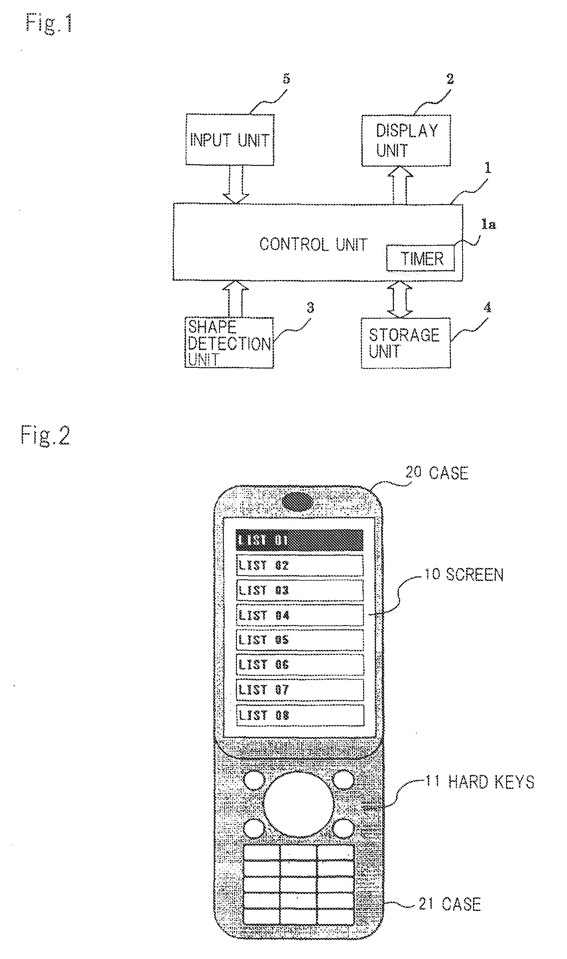

Fig. 1 is a block diagram showing a configuration of the main portion of a mobile phone according to the exemplary embodiment, of the present invention. The mobile phone according to the exemplary embodiment is a portable electronic device having a plurality of cases that can be changed from a first shape to a second shape or vice versa via at least one intermediate shape. The main portion includes control unit 1, display unit 2, shape detection unit 3, storage unit 4, and input unit 5,

Storage unit 4 is a storage typified by a semiconductor memory. Storage unit 4 stores a program or various data for operating the mobile phone. Input unit 5 includes a plurality of operation keys or function buttons. Input unit 5 supplies a signal according to an input operation that uses an operation key or a function button to control unit 1. Display unit 2. is a display typified by a liquid crystal display,

Shape detection unit 3 detects the shape of each case, and supplies its detection result to control unit 1. Control unit 1 provides various functions according to the program stored in storage unit 4. Specifically, control unit 1 determines the shape change based on the detection result from shape detection unit 3, and performs screen switching control according to the shape change. In addition, control unit 1 provides various functions that a general mobile phone has. Control unit 1 includes timer 1a. Timer 1a can be configured by software or hardware.

Figs, 2 to 4 schematically show three shapes that the mobile phone, according to the exemplary embodiment, can take,

As shown in Fig. 2, the mobile phone includes case 20 that has screen 10 to constitute display unit 2, and case 21 that has hard keys 11 to constitute input unit 5. On a surface of case 21 in which hard keys 11 are arranged, a support unit (not shown) is located to support a part of a surface opposite a surface in which screen 10 of case 20 is disposed. The support, unit has a sliding mechanism for sliding case 20 in a fixed direction, and a rotation mechanism for rotating case 20. The rotation mechanism has an axis perpendicular to the surface in which screen 10 of case 20 is disposed. Case 20 is rotated around the axis.

Fig. 2 shows a shape (hereinafter, "shape A") in which case 20 is slid to completely open the mobile phone. In shape A, screen 10 is used as a vertically-long screen. When seen from a surface side in which screen 10 of case 20 is disposed, hard keys 11 of case 21 are exposed, and a user can perform an input operation by using hard keys 11.

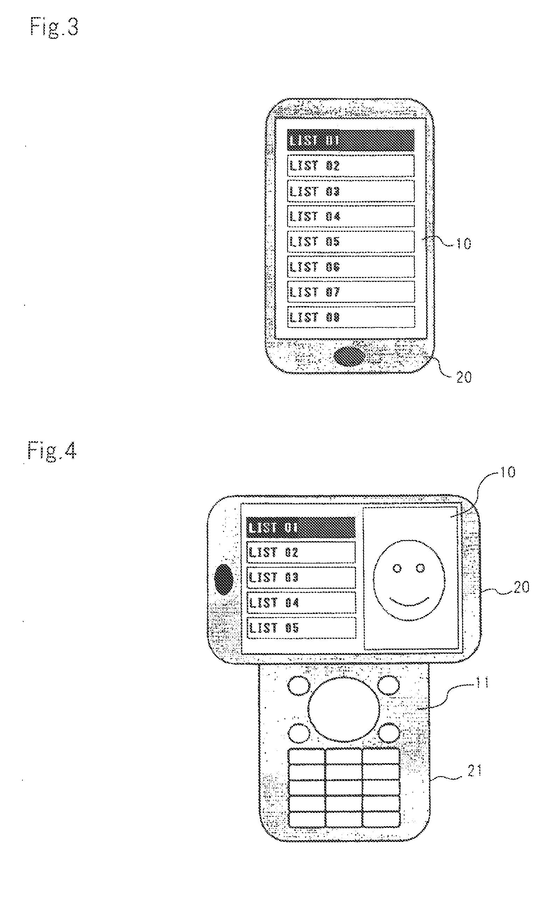

Fig. 3 shows a shape (hereinafter, "shape B") in which case 20 is slid in a direction opposite that of the example shown in Fig. 2 to completely close the mobile phone. In shape B, screen 10 is mainly used as a vertîcally-long screen, On this vertically-long screen, the screen in which the up-and-down direction of the vertically-long screen in shape A is reversed is displayed. When seen from the surface side in which screen 10 of case 20 is disposed, hard keys 11 of case 21 are covered with case 20, In this case, the user cannot perform an input operation by using any hard keys 11,

Fig. 4 shows an example in which case 20 is rotated to form the mobile phone into a T shape (hereinafter, "shape C") In shape C, screen 10 is used as a honzontally-long screen. When seen from the surface side in which screen 10 of case 20 is disposed, hard keys 11 of case 21 are exposed, and the user can perform an input operation by using hard keys 11. A screen configuration of the horizontally-long screen in shape C is different from those of the vertically-long screens in shape A and shape B.

Shape detection unit 3 includes a state detector configured by combing, for example, a magnet and a hall element. This state detector can detect the three shapes shown in Figs. 2 to 4.

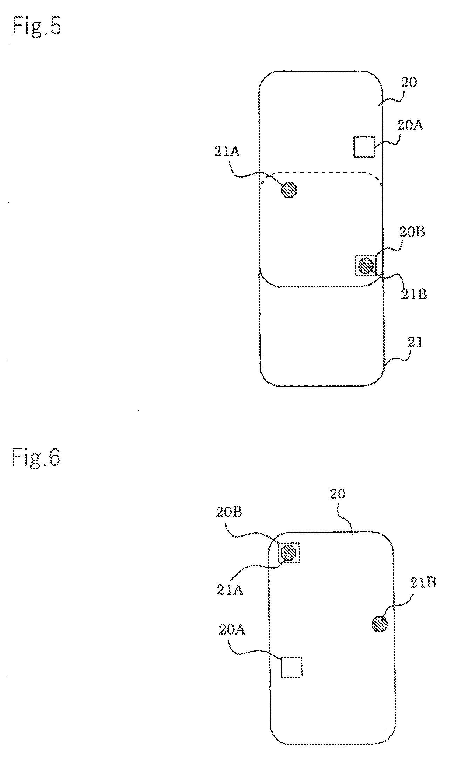

Fig. 5 schematically shows an arrangement of shape detection unit 3 for detecting shape A shown in Fig. 2. As shown in Fig. 5, shape detection unit 3 includes hall elements 20A and 20B located in case 20, and magnets 21 A and 21B located in case 21. HaH elements 20A and 20B are magnetic sensors in which outputs change according to the sizes of applied magnetic fields.

Fig. 5 shows a positional relationship between hall elements 20A and 20B and magnets 21 A and 21B when seen from the surface side in which screen 10 is formed. Hall element 20A is located near the center of the right edge of case 20, and hall element 20B is located in the right lower edge of case 20. Magnet 21A is located in the left upper edge of case 21, and magnet 21 B is located near the center of the right edge of case 21. In shape A, magnet 21 B is located close to hall element 20B, and magnet 21a and hall element 20A are located away from each other, Thus, an output level of hall element 20B is larger than that of hall element 20A.

Fig. 6 schematically shows an arrangement of shape detection unit 3 for detecting shape B shown, in Fig. 3. In shape B, magnet 21A is located close to hall element 20B, and magnet 21B and hall element 20A are located away from each other. Thus, the output level of hails element 20B is larger than that of hall element 20A.

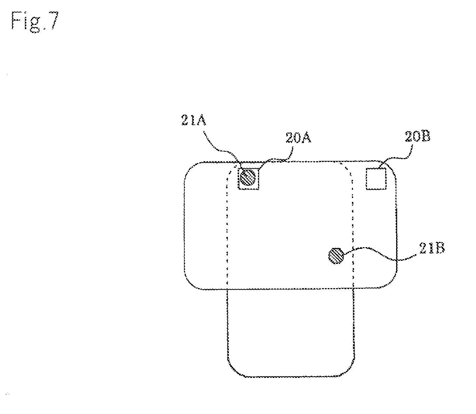

Fig. 7 schematically shows an arrangement of shape detection unit 3 for detecting shape C shown in Fig. 4. In shape C, magnet 2 1A is located close to hall element 20A, and magnet 21B and hall element 20B are located away from each other. Thus, the output level of hall element 20A is larger than that of hall element 20B.

Shapes A to C can be detected based on the output level relationships between hall elements 20A and 20B in the arrangement shown in Figs. 5 to 7. Specifically, when the output level of hall element 20B is larger than that of hall element 20A, one shape from among the shapes A and B can be detected. When the output level of hall element 20A is larger than that of hall element 20B, shape C can be detected.

Next, a screen switching operation in the mobile phone according to the exemplary embodiment is specifically described.

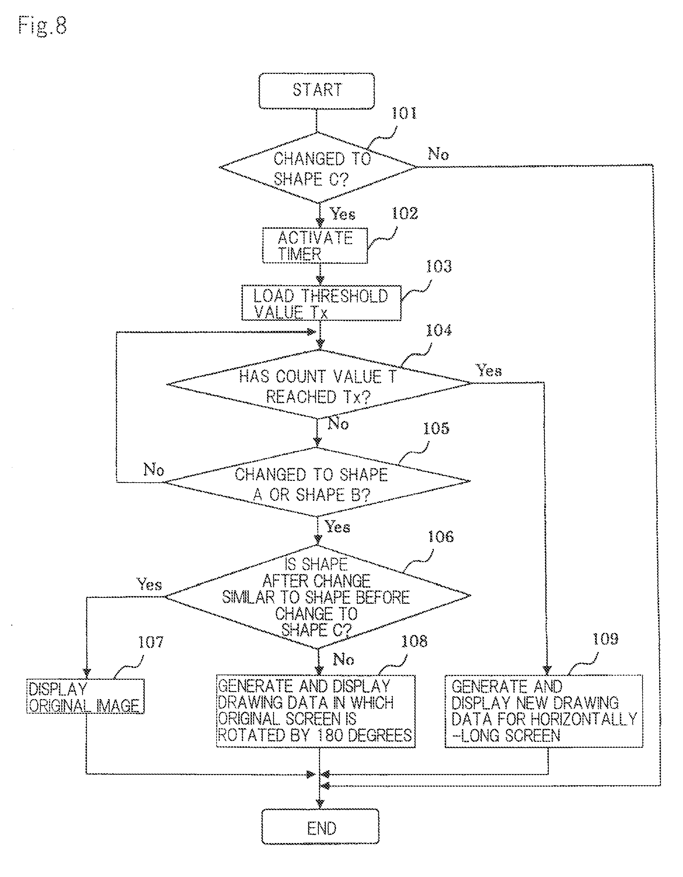

Fig. 8 is a flowchart showing a procedure for a processing operation I which the screen display is switched. This is a screen switching procedure when a change is made from shape A shown in Fig. 2 or shape B shown in Fig. 3 to shape C that is an intermediate shape shown in Fig. 4, and then to shape A or shape B.

First, in step 101, control unit 1 determines whether a change has been made from shape A or shape B to shape C. Specifically, when it is detected that a state in which the output level of hall element 20B is larger than that of hall element 20A has been changed to a state in which the output level of hall element 20A is larger than that of hall element 20B, control unit 1 determines that a change has been made from shape A or shape B to shape C.

In steps 102 and 103, after detection of the change to shape C, control unit 1 activates timer 1a, and reads threshold value Tx from storage unit 4. In step 104, control unit 1 determines whether count value T of timer 1a has reached threshold value Tx.

When it is detected that count value T has not reached threshold value Tx, in step 105, control unit 1 determines whether a change has been made from shape C to shape A or shape B. Specifically, when it is detected that a state in which the output level of hall element 20A is larger than that of hall element 20B has been changed to a state where the output level of hall element 20B is larger than that of hall element 20A, control unit 1 determines that a change has been made from shape C to shape A or shape B.

When it is detected that a change has been made from shape C to shape A or shape B before count value T has reached threshold value Tx, in step 106, control unit 1 determines whether the shape after the change is similar to that before the change to shape C. When the shape after the change is similar to that before the change to shape C, in step S107, control unit 1 causes display unit 2 to display an original image (an image displayed before the change to shape C) again. When the shape after the change is different from that before the change to shape C, in step S108, control unit 1 generates drawing data in which the original image is rotated by 180 degrees, stores the drawing data in storage unit 4, and causes display unit 2 to display an image based on the drawing data.

When it is determined in step 104 that count value T has reached threshold value Tx, in step 109, control unit 1 generates new drawing data for the horizontally-long screen, stores the drawing data in storage unit 4, and causes display unit 2 to display an image based on the drawing data. After count value T has reached threshold value Tx, control unit 1 resets the count value of timer 1a.

According to the screen switching, for example, when a change is made from shape A to shape B via shape C that is the intermediate shape, a change is made from shape A to shape C, and then a change is made from shape C to shape B before count value T reaches threshold value Tx. This way, the vertically-long screen (original image) of shape A is switched to the vertically-long screen (image obtained by rotating the original screen 180 degrees) of shape B without displaying any horizontally-long screen, Thus, because it is not necessary to display a horizontally long screen, the time that is needed for performing a screen switching operation can be shortened, and processing loads can be reduced.

When the horizontally-long screen of shape C is displayed, a change is made from shape A to shape C, and then the processing operation remains in a wait state until count value T reaches threshold value Tx. Thus, because of execution of step 109, display unit 2 displays a horizontally-long screen similar to that shown in Fig. 4.

Threshold value Tx is a value for determining whether the user wishes to use the mobile phone in shape C, and whether switching has been made between shape A and shape B via shape C. Threshold value Tx can be set to any value as long as it enables such determination.

The mobile phone described above is only one example of the present invention. Its configuration and operation can be appropriately changed. For example, the mobile phone can include three or more cases.

Three or more magnets and three or more hall elements can be arranged to enable identification of the respective shapes of the mobile phone, In place of the magnets and the hall elements, other detection elements (such as mechanical switches) can be used

The shapes of the mobile phone are not limited to the shapes shown in Figs. 2 to 4. The mobile phone can be changed to other shapes,

According to the exemplary embodiment of the present Invention, the portable electronic device includes a plurality of cases that can be changed from the first shape to the second shape or vice versa via at least one intermediate shape. The portable electronic device includes the display unit, the shape detection unit, and the control unit. The shape detection unit outputs a signal indicating the shape (the first shape, the second shape, or the intermediate shape) into which the plurality of cases has been changed. The control unit recognizes the shape of the plurality of cases based on the signal from the shape detection unit and causes the display unit to display an image with a screen configuration corresponding to the recognized shape. When a change is made from the first or second shape to the intermediate shape, the control unit determines whether to enable implementation of a processing operation to cause the display unit to display an image with a screen configuration corresponding to the intermediate shape depending on whether time that elapsed in a state of maintaining the intermediate shape, from the time at which a change in the shape occurred, has reached a threshold value.

In the portable electronic device, when it is determined that the elapsed time has reached the threshold value, the control unit can cause the display unit to display the image with the screen configuration corresponding to the intermediate shape.

In the portable electronic device, when a change is made from the intermediate shape to the first or second shape before, the elapsed time reaches the threshold value, the control unit can be configured to inhibit implementation of a processing operation to cause the display unit to display the image with the screen configuration corresponding to the intermediate shape. In this case, the control unit compares the shape changed from the intermediate shape with the shape before the change to the intermediate shape. When these shapes are different from each other, the control unit generates drawing data in which the image displayed with the screen configuration corresponding to the shape before the change to the intermediate shape is rotated by 180 degrees, and causes the display unit to display an image based on the drawing data. The control unit compares the shape changed from the intermediate shape with the shape before the change to the intermediate shape and, when these shapes are similar to each other, causes the display unit to display the image displayed with the screen configuration corresponding to the shape before the change to the intermediate shape again,

The configuration enables control that inhibits, when a change is made from the first or second shape to the intermediate shape and when a change is made from the intermediate shape to the first or second shape before the elapsed time reaches the threshold value, implementation of processing operation to di splay the image with the screen configuration corresponding to the intermediate shape. For example, in the process of a change from shape A shown in Fig. 2 through shape C shown in Fig. 4 to shape B shown in Fig. 3, when that time that elapsed from the change to shape C to the change to shape B is less than the threshold value, the horizontally-long screen in shape C is not displayed, Thus, processing loads accompanying the screen switching can be reduced, and the time that is needed for the screen switching can be shortened. Especially, to display an image on the horizontally-long screen of shape C having a screen configuration completely different from those of the vertically-long screens of shapes A and B, new drawing data must be generated. Nonexecution of display processing on such a horizontally-long screen is accordingly very advantageous for reducing processing loads and shortening processing time.

As described above, according to the present invention, control can be performed, which inhibits implementation of a processing operation to display the image with the screen configuration corresponding to the intermediate shape when a change is made from the first or second shape to the intermediate shape and when a change is made from the intermediate shape to the first or second shape before the elapsed time reaches the threshold value. As a result, processing loads accompanying the screen switching can be reduced, and the time that is needed for screen switching can be shortened.

The present invention can be applied to a general portable electronic device having a plurality of cases that can be changed from a first shape to a second shape via at least one intermediate shape or vice versa.

The present Invention has been described by way of embodiment. However, the invention is not limited to the embodiment. Various changes understandable to those skilled in the art can be made to the configuration and operation of the invention without departing from a spirit of the invention.

This application claims priority from Japanese Patent Application No. 2008-275-1,13 filed October 27, 2008, which is hereby incorporated by reference herein in its entirety.

## Claims

1. A portable electronic device having a plurality of cases that can be changed from a first shape to a second shape or vice versa via at least one intermediate shape, comprising:
a display unit;
a shape detection unit that outputs a signal indicating one shape from among the first shape, the second shape, and the intermediate shape into which the plurality of cases has been changed; and
a control unit that recognizes the shape of the plurality of cases based on the signal from the shape detection unit and that causes the display unit to display an image with a screen configuration corresponding to the recognized shape,
wherein when a change is made from the first or second shape to the intermediate shape, the control unit determines whether to enable implementation of a processing operation to cause the display unit to display an image with a screen configuration corresponding to the intermediate shape depending on whether time that elapsed in a state of maintaining the intermediate shape, from the time at which a change in the shape of the case occurred, has reached a threshold value.

2. The portable electronic device according to claim 1, wherein when it is determined that the elapsed time has reached the threshold value, the control unit causes the display unit to display the image with the screen configuration corresponding to the intermediate shape.

3. The portable electronic device according to claim 1, wherein when a change is made from the intermediate shape to the first or second shape before the elapsed time reaches the threshold value, the control unit inhibits implementation of a processing operation to cause the display unit to display the image with the screen configuration corresponding to the intermediate shape.

4. The portable electronic device according to claim 3, wherein the control unit compares a shape changed from the intermediate shape with a shape before the change to the intermediate shape and, when these shapes are different from each other, the control unit generates drawing data in which an image displayed with a screen configuration corresponding to the shape before the change to the intermediate shape is rotated by 180 degrees, and causes the display unit to display an image based on the drawing data.

5. The portable electronic device according to claim 3, wherein the control unit compares a shape changed from the intermediate shape with a shape before the change to the intermediate shape and, when these shapes are similar to each other, the control unit causes the display unit to display an image displayed with a screen configuration corresponding to the shape before the change to the intermediate shape again.

6. A display screen switching method implemented in a portable electronic device having a plurality of cases that can be changed from a first shape to a second shape or vice versa via at least one intermediate shape, the display screen switching method comprising:
determining one shape from among the first shape, the second shape, and the intermediate shape into which the plurality of cases has been changed, and causing a display unit to display an image with a screen configuration corresponding to the determined shape; and,
when a change is made from the first or second shape to the intermediate shape, determining whether to enable implementation of a processing operation to cause the display unit to display an image with a screen configuration corresponding to the intermediate shape depending on whether time that elapsed in a state of maintaining the intermediate shape, from the time at which a change in the shape occurred, has reached a threshold value.
